# EUROPÄISCHE PATENTSCHRIFT

(11) **EP 3 609 030 B1**
(45) Veröffentlichungstag und Bekanntmachung des Hinweises auf die Patenterteilung: **06.04.2022**
(21) Anmeldenummer: 19190015.8
(22) Anmeldetag: 05.08.2019
(51) Int. Cl.: H02H 3/02, H01H 9/54, H01H 33/59, H02H 3/087

(54) **VORRICHTUNG UND VERFAHREN ZUR KURZSCHLUSSUNTERBRECHUNG**
DEVICE AND METHOD FOR SHORT CIRCUIT INTERRUPTION
DISPOSITIF ET PROCÉDÉ DE COUPURE DE COURT-CIRCUIT

(30) Priorität: 07.08.2018 DE 102018213238
(43) Veröffentlichungstag der Anmeldung: 12.02.2020
(73) Patentinhaber: Siemens Energy Global GmbH & Co. KG, 81739 München (DE)
(72) Erfinder: Döring, David, 91058 Erlangen (DE); Ebner, Günter, 91239 Henfenfeld (DE); Würflinger, Klaus, 90419 Nürnberg (DE); Zeller, Marcus, 91056 Erlangen (DE)

(56) Entgegenhaltungen:
- EP-A1- 3 063 850
- EP-A1- 3 240 004
- WO-A1-92/07402

## Beschreibung

### Gebiet der Erfindung

Die vorliegende Erfindung betrifft eine Vorrichtung sowie ein Verfahren zum Unterbrechen eines in einem ersten DC-Leiter und/oder in einem zweiten DC-Leiter fließenden elektrischen DC-Stroms in Übertragungs- und Verteilnetzen.

### Hintergrund

Hochspannungs-Anlagen werden z.B. zur Übertragung und Verteilung von elektrischer Energie verwendet. Insbesondere sind herkömmlicherweise Hochspannungsgleichstrom-Übertragungsanlagen (HGÜ-Anlagen) zur Übertragung von elektrischer Energie durch Gleichstrom über hunderte von Kilometern verwendet. HGÜ-Anlagen setzen häufig "Voltage-Source-Converter" (VSC) ein, welche z.B. "isolated-gate bipolar transistors" (IGBTs) umfassen. Mithilfe dieser Umrichter kann der Gleichstrom in Wechselstrom (und umgekehrt) umgewandelt werden, wobei er z.B. in einem Übertragungsnetz für Verbraucher zur Verfügung gestellt werden kann. Zur Gleichstromübertragung mit VSC werden herkömmlicherweise DC-Kabel verwendet, welche im Boden vergraben sind. In der jüngeren Vergangenheit werden jedoch auch bei dieser Anwendung vermehrt Freileitungen als Übertragungsstrecke verwendet. Bei Freileitungen ist das Risiko einer kurzzeitigen, unvorhergesehenen Störung (z.B. durch Blitzeinschlag oder andere mechanische Einwirkungen) gegenüber im Boden vergrabenen Kabeln erhöht.

Bei Verwendung von MMC-Umrichtern mit Halbbrücken ist eine DC-Fehlerabschaltungs-/Klärung jedoch nur über die AC-Seite oder durch einen zusätzlichen DC-Schalter (auch als DC-Breaker bezeichnet) möglich. In einem "Multi-Terminal"-System sollte allerdings für eine selektive Abschaltung (sowohl für Kabel- als auch für Freileitungsanwendungen) ab einer bestimmten Komplexität eine Fehlerklärung durch DC-Schalter vorgenommen werden.

Um die Versorgungssicherheit in größeren Multiterminal-Systemen (DC-Kabel als auch Freileitungsanwendungen) zu erhöhen, ist es darüber hinaus wünschenswert, die erforderliche Selektivität durch DC-Schalter sicherzustellen.

Langsamere DC-Schalter, z.B. sogenannte Hybridschalter, welche zwangsläufig DC-Drosseln mit einer Induktivität von einigen hundert mH bis zu einem Henry (H) benötigen, verursachen fast keine Verluste. Ein Problem bei einem DC-Schalter ist der Einsatz im Strompfad. Dies kann Reflexions- und Brechungseffekte im Übertragungssystem bewirken, die durch die eingebrachte Gegenspannung des DC-Schalters beim Schalten verursacht werden. Damit verbunden kommt es auch zur Spannungsumkehr, was gerade bei der Verwendung von Kabeln zu Problemen führt.

Herkömmlicherweise wurden zur Fehlerklärung bzw. zur Unterbrechung eines Gleichstroms in einem DC-System hybride DC-Schalter eingesetzt, da diese relativ geringe Verluste verursachen. Derartige hybride DC-Schalter sind dabei im Strompfad angeordnet worden.

Es ist jedoch beobachtet worden, dass bisher beschriebene Verfahren zur Unterbrechung eines Gleichstroms in einem DC-System, insbesondere abhängig von Übertragungssystem, nicht in allen Fällen zuverlässig arbeiten und/oder zu relativ hohen Verlusten bzw. Energieaufnahmen führen.

Ein Leistungsschalter, der Vollbrücken-Schaltmodule umfasst, ist aus der EP 3 240 004 A1 bekannt.

Eine Vorrichtung zum Schutz eines Stromrichters bei DCseitigen Kurzschlüssen, die eine zur DC-Seite des Stromrichters parallel geschaltete Reihenschaltung elektronischer Schalter sowie eine in den DC-Pol eingefügte Schaltvorrichtung umfasst, ist aus der WO 2015/062970 A1 bekannt.

Eine weitere Schutzschalter-Anordnung ist aus der WO 92/07402 bekannt.

Es ist somit eine Aufgabe der vorliegenden Erfindung, eine Vorrichtung und ein entsprechendes Verfahren zum Unterbrechen eines in einem ersten DC-Leiter und/oder in einem zweiten DC-Leiter fließenden elektrischen Gleichstroms zu schaffen, wobei eine zuverlässige Unterbrechung bei Auftreten eines Gleichstroms gewährleistet ist und ferner Verluste und Energieaufnahme durch Entkopplung des Netzes und der HGÜ gering gehalten werden.

Die Aufgabe wird durch die Gegenstände der unabhängigen Ansprüche gelöst. Die abhängigen Ansprüche spezifizieren besondere Ausführungsformen der vorliegenden Erfindung.

### Zusammenfassung der Erfindung

Gemäß einer Ausführungsform der vorliegenden Erfindung ist bereitgestellt eine Vorrichtung zum Unterbrechen eines in einem ersten DC-Leiter und/oder einem zweiten DC-Leiter fließenden elektrischen Gleichstroms, wobei der erste DC-Leiter an einem Ende mit einem ersten und der zweite DC-Leiter an einem Ende mit einem zweiten Anschluss eines DC-Systems, insbesondere DC-Übertragungssystems, verbunden sind, wobei die Vorrichtung aufweist: ein erstes steuerbares Schaltsystem, das elektrisch zwischen dem ersten DC-Leiter und dem zweiten DC-Leiter verbunden ist; und ein zweites steuerbares Schaltsystem in dem ersten DC-Leiter oder in dem zweiten DC-Leiter zwischen einem zum ersten Schaltsystem führenden Abzweigpunkt in dem ersten DC-Leiter bzw. dem zweiten DC-Leiter und dem ersten bzw. zweiten Anschluss des DC-Systems.

Der erste und der zweite DC-Leiter können flexibles oder starres elektrisch leitfähiges Material umfassen und können z.B. einen Umrichter mit einer Endstation eines DC-Übertragungssystems verbinden. Somit kann die Vorrichtung z.B. zwischen einem Umrichter, insbesondere einem DC-AC-Umrichter, und einer Endstation eines Übertragungssystems angeordnet sein, um insbesondere im Falle eines Kurzschlusses innerhalb des DC-Übertragungssystems eine Unterbrechung des Stromflusses zu erreichen.

Unter einem steuerbaren Schaltsystem ist ein elektrisches System zum kontrollierten Öffnen bzw. Schließen einer galvanischen Verbindung bzw. einer elektrischen (Stromfluss erlaubenden) Verbindung verstanden. Das Schaltsystem kann dabei sowohl elektronische Schaltelemente als auch mechanische Schaltelemente oder lediglich elektronische Schaltelemente oder lediglich mechanische Schaltelemente umfassen. Zum Steuern des jeweiligen Schaltsystems kann z.B. ein Steuereingang, z.B. Gate eines Transistors, vorgesehen sein. Jedes Schaltsystem kann zumindest zwei Zustände einnehmen, einen geschlossenen (z.B. nieder-ohmigen) Zustand, in welchem eine elektrische Verbindung (insbesondere galvanische Verbindung) etabliert ist, und einen offenen (z.B. hoch-ohmigen) Zustand, in welchem eine elektrische Verbindung (insbesondere galvanische Verbindung) unterbrochen ist, so dass Stromfluss verhindert ist, bzw. so dass zumindest eine sehr hoch-ohmige Verbindung besteht, ohne einen Stromfluss vollständig zu unterbinden. Der offene Zustand kann auch als ein sehr hochohmiger Zustand aufgefasst werden.

In einem normalen (z.B. fehlerfreien) Betriebszustand (z.B. wenn kein Kurzschluss z.B. in dem DC-System vorliegt) kann das erste steuerbare Schaltsystem in einem offenen Zustand sein. In einem normalen (z.B. fehlerfreien) Betriebszustand kann ferner das zweite steuerbare Schaltsystem in einem geschlossenen Zustand sein. Somit kann in einem normalen Betriebszustand, in welchem kein Fehler, insbesondere kein Kurzschluss auftritt, z.B. der Umrichter über den ersten DC-Leiter und den zweiten DC-Leiter mit dem DC-System, insbesondere DC-Übertragungssystem verbunden sein, ohne dass der erste DC-Leiter mit dem zweiten DC-Leiter (galvanisch) verbunden ist bzw. nur sehr hoch-ohmig verbunden ist.

In einem Fehlerfalle, insbesondere in einem Falle eines Auftretens eines Kurzschlusses z.B. in dem DC-System, kann zumindest für eine kurze Zeitspanne das erste steuerbare Schaltsystem den geschlossenen Zustand annehmen, während gleichzeitig das zweite steuerbare Schaltsystem noch in dem geschlossenen Zustand befindlich ist. Nachdem dieser Schaltzustand für eine gewisse Zeitspanne aufrechterhalten wird, kann das zweite steuerbare Schaltsystem in einen offenen Zustand überführt werden, während das erste steuerbare Schaltsystem noch in dem geschlossenen Zustand befindlich ist. Danach kann das erste steuerbare Schaltsystem wieder in den offenen Zustand überführt werden.

Das Ändern der Schaltzustände des ersten bzw. des zweiten Schaltsystems kann durch ein entsprechendes Steuersystem mit Schaltlogik durchgeführt werden, insbesondere basierend auf gemessenem Strom und/oder Spannung in zumindest einem der DC-Leiter und/oder zwischen den beiden DC-Leitern.

Gemäß einer Ausführungsform der vorliegenden Erfindung ist somit eine Kombination aus einem mindestens für eine Nennspannung (und insbesondere noch leicht oberhalb der Nennspannung, z.B. 1.05 fachem der Nennspannung, um den Strom bei der immer noch treibenden AC Spannung zu unterbrechen) ausgelegten DC-Breaker (z.B. erstes Schaltsystem), z.B. gegen Erde, und einem "kleinen" (bezogen auf die Höhe der Gegenspannung) elektronischen DC-Schalter (z.B. Teil des zweiten Schaltsystems) mit schnellem mechanischen Schalter (z.B. weiterer Teil des zweiten Schaltsystems) (z.B. Vakuumröhre oder Gasröhre) im Strompfad vorgesehen.

Das zweite steuerbare Schaltsystem kann verschieden von dem ersten steuerbaren Schaltsystem aufgebaut sein, insbesondere zumindest ein mechanisches steuerbares Schaltsystem sowie ein elektronisches Schaltsystem umfassen.

Durch Verwenden der Vorrichtung gemäß den oben skizzierten Schaltvorgängen kann ein DC-Kurzschluss auf zuverlässige und einfache Weise geklärt werden.

Gemäß der vorliegenden Erfindung weist die Vorrichtung ferner ein Steuersystem auf, das ausgebildet ist, im Falle eines in dem ersten DC-Leiter und/oder dem zweiten DC-Leiter fließenden Gleichstromes oberhalb eines Schwellwertes, insbesondere im Falle eines Kurzschlusses im DC-Übertragungssystem: das erste Schaltsystem für eine Zeitspanne zu schließen, um insbesondere zunächst einen Teil des Gleichstroms vom dem ersten DC-Leiter durch das erste Schaltsystem zum zweiten DC-Schalter zu führen (und insbesondere die Spannung für das zweite Schaltersystem zu reduzieren, welches z.B. nur ein sehr geringes Spannungsrating weit unter der Nennspannung haben kann), und bei geschlossenem ersten Schaltsystem das zweite Schaltsystem zu öffnen.

Das Steuersystem kann in Software und/oder Hardware implementiert sein. Wenn das erste Schaltsystem für einen Zeitraum bzw. für eine Zeitspanne geschlossen ist, kann ein Teil des Kurzschlussstromes von dem ersten DC-Leiter durch das erste Schaltsystem zu dem zweiten DC-Schalter oder DC-Leiter fließen. Aufgrund dessen kann ein zuverlässiges Öffnen des zweiten Schaltsystems erleichtert werden, insbesondere wenn das zweite Schaltsystem zumindest ein mechanisches Schaltsystem umfasst. Fließt nämlich ein Teil des Kurzschlussstromes über das erste Schaltsystem, kann eine Spannung über dem zweiten Schaltsystem nach Öffnen des zweiten Schaltsystems kleiner sein als wenn nicht ein Teil des Kurzschlussstroms nach Schließen des ersten Schaltsystems durch das erste Schaltsystem fließt. Der künstliche Kurzschluss kann die Spannung am Abzweigpunkt stark reduzieren. Insbesondere kann aufgrund der geringeren Spannung über dem zweiten Schaltsystem ein Risiko einer Lichtbogenbildung an einem mechanischen Schaltsystem des zweiten Schaltsystems verringert werden. Dadurch kann das gesteuerte Öffnen des zweiten Schaltsystems zuverlässiger durchgeführt werden.

Der Schwellwert für den Gleichstrom kann z.B. zwischen 1.1 p.u. des DC-Nennstromes und 3.0 p.u. des DC Nennstromes liegen.

Gemäß der vorliegenden Erfindung beträgt die Zeitspanne zwischen 0,5 ms und 50 ms, insbesondere zwischen 1 ms und 10 ms. Die Zeitspanne kann derart gewählt werden, dass ein mechanisches Schaltsystem, welches in dem zweiten Schaltsystem umfasst sein kann, in dieser Zeitspanne zuverlässig in einen geöffneten Zustand übergehen kann. Die Zeitspanne kann gemäß der bestimmten Anwendung eingestellt bzw. gewählt werden.

Gemäß der vorliegenden Erfindung ist das Steuersystem ferner ausgebildet, das erste Schaltsystem nach Öffnen des zweiten Schaltsystems zu öffnen. Damit kann das erste Schaltsystem wieder in den Normalzustand überführt werden.

Gemäß der vorliegenden Erfindung weist das erste steuerbare Schaltsystem ein erstes elektronisches Schaltsystem auf oder ist das erste steuerbare Schaltsystem ein elektronisches Schaltsystem. Ein elektronisches Schaltsystem braucht keine beweglichen Elemente aufweisen. Ein Etablieren einer galvanischen Verbindung kann z.B. durch ein Halbleiterbauteil, wie etwa einen Transistor durch Ladungsverschiebung innerhalb des Halbleitermaterials z.B. durch Anlegen eines Gate-Signals, erreicht werden. Das erste elektronische Schaltsystem kann insbesondere ein oder mehrere Leistungstransistoren umfassen, etwa Leistungstransistoren, die in Reihe geschaltet sind. Beispiele für Transistoren, die in dem ersten elektronischen Schaltsystem umfasst sein können, sind z.B. IGBT, Feldeffekttransistoren (FET), Bipolar-Transistoren, Thyristoren oder andere. In dem elektronischen Schaltsystem können auch eine oder mehrere Dioden (z.B. antiparallel mit einem Transistor) vorhanden sein. Der Vorteil eines elektronischen Schaltsystems kann in der Schaltgeschwindigkeit gesehen werden. Insbesondere können elektronische Schaltsysteme schneller schalten als etwa mechanische Schaltsysteme. Ebenfalls können die elektronischen Schaltsysteme prellfrei und auch verschleißfrei arbeiten. Im Unterschied zu einem mechanischen Schaltsystem kann ein elektronisches Schaltsystem einen höheren Übergangswiderstand im eingeschalteten (geschlossenen) Zustand haben und ein geringeres Isolationsvermögen im ausgeschalteten (geöffneten) Zustand haben als ein entsprechender mechanischer Schalter. Elektronische Schalter des Schaltsystems können im Bereich bis unter einer Mikrosekunde geschaltet werden.

Gemäß der vorliegenden Erfindung weist das zweite steuerbare Schaltsystem eine Reihenschaltung eines -elektronischen Schaltsystems und eines mechanischen Schaltsystem auf, wobei das mechanische Schaltsystem z.B. eine Vakuumröhre oder einen gasisolierten Schalter aufweist, wobei das erste und/oder zweite elektronische Schaltsystem insbesondere eine Reihenschaltung von Leistungstransistoren aufweist.

Das zweite elektronische Schaltsystem kann gleich oder verschieden von dem ersten elektronischen Schaltsystem aufgebaut sein.

Das mechanische Schaltsystem kann zumindest ein bewegliches (insbesondere makroskopisches) Element aufweisen, insbesondere einen beweglichen Leiter. Zum Öffnen bzw. Schließen (allgemein zum Schalten) des mechanischen Schaltsystems kann das bewegliche Element bewegt werden, um zwischen zwei elektrisch leitfähigen Teilen eine galvanische Verbindung herzustellen bzw. diese zu unterbrechen. Das mechanische Schaltsystem kann z.B. eine oder mehrere bistabile Kippschalter, Wippschalter, Stufenschalter, Rastschalter, Mehrfach- oder Wahlschalter, Trenner, Lasttrenn-, Leistungsschalter und/oder Federschalter umfassen. Das mechanische Schaltsystem kann durch einen Aktuator, z.B. Elektromagneten, betätigt, d.h. geschaltet werden. Der Aktuator kann z.B. dazu mit dem Steuersystem verbunden sein.

Die Verwendung einer Kombination eines elektronischen Schaltsystems oder eines mechanischen Schaltsystems für das zweite steuerbare Schaltsystem kann die Anforderungen an den mechanischen Schalter verringern, während noch relativ kurze Schaltzeiten ermöglicht sind. So kann durch Öffnen des elektronischen Schaltsystems der Strom durch den mechanischen Schalter zu Null gezwungen werden. Dadurch kann entweder der Schalter unterstützt werden oder aber sogar bei vorrangiger Öffnung des elektronischen Schaltsystems der Lichtbogen im mechanischen Schalter ganz unterbunden werden.

Gemäß einer Ausführungsform der vorliegenden Erfindung ist der erste DC-Leiter an einem anderen Ende mit einem ersten und ist der zweite DC-Leiter an einem anderen Ende mit einem zweiten Anschluss eines Umrichters, insbesondere DC-AC-Umrichters, verbunden. Damit kann eine Einspeisung von elektrischer Energie, welche mittels des DC-Übertragungssystems von weither übertragen worden ist, z.B. in ein Verteilernetz erreicht werden.

Der Umrichter und/oder das DC-Übertragungssystem können jeweils mit einem Übertragungsnetz oder einem Verteilernetz verbunden sein. Damit können herkömmliche System unterstützt werden.

Gemäß einer Ausführungsform der vorliegenden Erfindung weist die Vorrichtung ferner ein Messsystem auf, ausgebildet: um Strom in dem ersten und/oder zweiten DC-Leiter zu messen; und/oder um Spannung zwischen dem ersten und dem zweiten DC-Leiter (oder dem ersten und oder den zweiten DC-Leiter gegen Erde) zu messen, wobei Werte für gemessenen Strom und/oder Spannung der Steuerung zugeführt werden.

Das zweite steuerbare Schaltsystem kann (entweder) in dem ersten DC-Leiter (und/oder) in dem zweiten DC-Leiter vorgesehen sein. Wenn der zweite DC-Leiter mit Erde bzw. Masse verbunden ist, kann das zweite steuerbare Schaltsystem insbesondere in dem ersten DC-Leiter vorgesehen sein.

Die Steuerung kann eine Logikkomponente umfassen, um basierend auf den Werten für gemessenen Strom und/oder Spannung das erste Schaltsystem zu schließen und/oder das zweite Schaltsystem zu öffnen. Ferner kann die Steuerung bzw. die Logikkomponente derart ausgebildet sein, auch basierend auf den gemessenen Werten für Strom und/oder Spannung das erste Schaltsystem zu öffnen und/oder das zweite Schaltsystem zu schließen. Damit kann gewährleistet sein, dass die Vorrichtung immer abhängig von den elektrischen Gegebenheiten in einem definierten Zustand befindlich ist, um insbesondere Komponenten vor Beschädigungen zu schützen.

Gemäß einer Ausführungsform der vorliegenden Erfindung ist zwischen dem ersten oder zweiten Anschluss des Umrichters und dem Abzweigpunkt eine Drossel in dem ersten oder dem zweiten DC-Leiter zur Strombegrenzung verbunden. Die Drossel kann die zeitliche Änderung eines Stroms auf einen gewissen Wert begrenzen aufgrund der beim Erhöhen bzw. Erniedrigen des Stromes erfolgten Induktion, welche der Ursache entgegenwirkt.

Das Übertragungssystem kann mindestens eine Freileitung aufweisen und/oder der zweite DC-Leiter kann mit Masse verbunden sein. Wenn der zweite DC-Leiter mit Masse verbunden ist, kann auch das DC-Übertragungssystem einfacher aufgebaut sein, da dieses lediglich einen einzigen DC-Leiter umfassen braucht. Der zweite Pol kann durch Masse (Erdpotential) gegeben sein.

Es sollte verstanden werden, dass Merkmale, welche individuell und/oder in irgendeiner Kombination im Zusammenhang mit einer Vorrichtung zum Unterbrechen eines in einem ersten DC-Leiter und/oder einem zweiten DC-Leiter fließenden elektrischen Gleichstroms erläutert, beschrieben oder bereitgestellt sind, auch, individuell oder in irgendeiner Kombination, für ein Verfahren eines Unterbrechens eines in einem ersten DC-Leiter und einem zweiten DC-Leiter fließenden elektrischen Gleichstroms angewendet werden können und umgekehrt, gemäß Ausführungsformen der vorliegenden Erfindung.

Gemäß einer Ausführungsform der vorliegenden Erfindung ist bereitgestellt ein Verfahren eines Unterbrechens eines in einem ersten DC-Leiter und/oder einem zweiten DC-Leiter fließenden elektrischen Gleichstroms, wobei der erste DC-Leiter an einem Ende mit einem ersten und der zweite DC-Leiter an einem Ende mit einem zweiten Anschluss eines DC-Systems, insbesondere DC-Übertragungssystems, verbunden sind, wobei das Verfahren aufweist: Schließen eines ersten steuerbaren Schaltsystems, das elektrisch zwischen dem ersten DC-Leiter und dem zweiten DC-Leiter verbunden ist; und Öffnen eines zweiten steuerbaren Schaltsystems in dem ersten DC-Leiter oder in dem zweiten DC-Leiter zwischen einem zum ersten Schaltsystem führenden Abzweigpunkt in dem ersten DC-Leiter bzw. dem zweiten DC-Leiter und dem ersten bzw. zweiten Anschluss des DC-Systems.

Ausführungsformen der vorliegenden Erfindung werden nun mit Bezug auf die beiliegenden Zeichnungen erläutert. Die Erfindung ist nicht auf die illustrierten oder beschriebenen Ausführungsformen beschränkt.

### Kurze Beschreibung der Zeichnungen

Fig. 1 illustriert in einem schematischen Schaltungsdiagramm eine Vorrichtung zum Unterbrechen eines Gleichstroms gemäß einer Ausführungsform der vorliegenden Erfindung;
Fig. 2 illustriert verschiedene Zustände der in Fig. 1 illustrierten Vorrichtung zum Unterbrechen eines Gleichstromes gemäß einem Verfahren einer Ausführungsform der vorliegenden Erfindung.

### Detaillierte Beschreibungen von Ausführungsformen

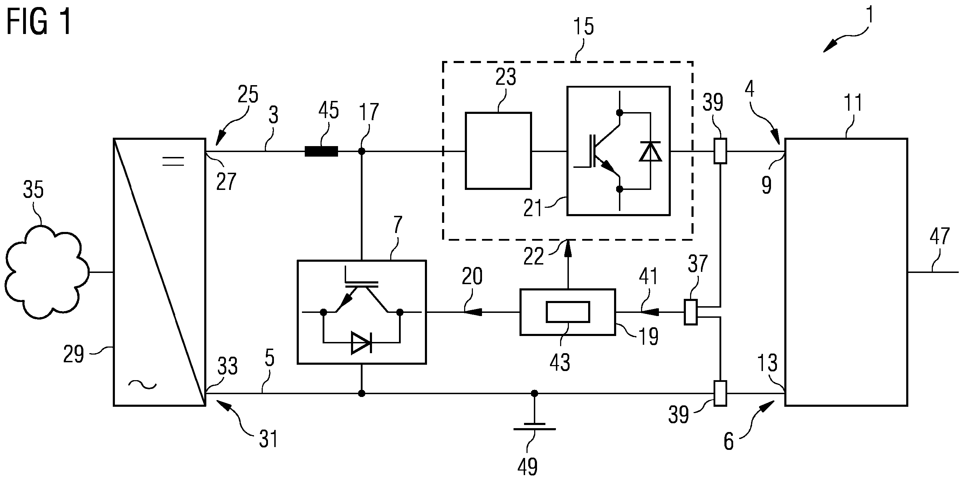

Die in Fig. 1 als schematisches Schaltungsdiagramm illustrierte Vorrichtung 1 zum Unterbrechen eines in einem ersten DC-Leiter 3 und einem zweiten DC-Leiter 5 fließenden elektrischen Gleichstroms gemäß einer Ausführungsform der vorliegenden Erfindung weist ein erstes steuerbares Schaltsystem 7 auf, welches elektrisch zwischen dem ersten DC-Leiter 3 und dem zweiten DC-Leiter 5 verbunden ist. Der erste DC-Leiter 3 ist an einem Ende 4 mit einem ersten Anschluss 9 eines DC-Systems 11 verbunden. Der zweite DC-Leiter 5 ist an einem Ende 6 mit einem zweiten Anschluss 13 des DC-Systems 11, insbesondere eines DC-Übertragungssystems, verbunden. Die Vorrichtung 1 weist ferner ein zweites steuerbares Schaltsystem 15 in dem ersten DC-Leiter 3 (oder in anderen Ausführungsformen in dem zweiten DC-Leiter 5) zwischen einem zum ersten Schaltsystem 7 führenden Abzweigpunkt 17 in dem ersten DC-Leiter 3 (bzw. in einem anderen Ausführungsbeispiel dem zweiten DC-Leiter 5) und dem ersten Anschluss 9 des Übertragungssystems 11 (bzw. dem zweiten Anschluss 13 des Übertragungssystems 11) auf.

Die Vorrichtung 1 weist ferner ein Steuersystem 19 auf, welches ausgebildet ist, im Falle eines in dem ersten DC-Leiter 3 fließenden Gleichstromes oberhalb eines Schwellwertes das erste Schaltsystem 7 für eine Zeitspanne zu schließen und bei geschlossenem ersten Schaltsystem 7 das zweite Schaltsystem 15 zu öffnen. Über Steuersignale 20 bzw. 22 steuert die Steuerung 19 sowohl das erste Schaltsystem 7 als auch das zweite Schaltsystem 15 (insbesondere separat das mechanische Schaltsystem 23 und das elektronische Schaltsystem 21) zum Einnehmen definierter Schaltzustände an.

Das erste Schaltsystem 7 kann als ein rein elektronisches Schaltsystem ausgebildet sein, ohne mechanische Schaltelemente zu umfassen. Das zweite steuerbare Schaltsystem 15 weist eine Reihenschaltung eines zweiten elektronischen Schaltsystems 21 und eines mechanischen Schaltsystems 23 auf. Die elektronischen Schaltsysteme 7, 21 können z.B. jeweils eine Reihenschaltung von Leistungstransistoren und/oder Dioden aufweisen. Insbesondere können sie eine Reihenschaltung von Parallelschaltungen von Transistoren und Dioden aufweisen.

Der erste DC-Leiter 3 ist an einem anderen Ende 25 mit einem ersten Anschluss 27 eines Umrichters 29 verbunden und der zweite DC-Leiter 5 ist an einem anderen Ende 31 mit einem zweiten Anschluss 33 des Umrichters 29 verbunden. Der Umrichter 29 kann z.B. mit einem Verteilernetz 35 verbunden sein. Der Umrichter 29 kann für Hochspannung ausgelegt sein, insbesondere zwischen 10 kV und 1200 kV. An den Anschlüssen 27, 33 kann der Umrichter 29 eine Gleichspannung bereitstellen. Energie in das Verteilernetz 35 kann durch Konversion des Gleichstroms in Wechselstrom (oder umgekehrt) zugeführt werden, der Umrichter 29 kann somit ein DC-AC-Umrichter sein. Das erste Schaltsystem 7 ist für eine Nennspannung des Umrichters ausgelegt.

Die Vorrichtung 1 weist ferner ein Messsystem 37 auf, welches über Messsensoren 39 Strom in dem ersten DC-Leiter und/oder dem zweiten DC-Leiter 5 zu messen in der Lage ist, sowie ausgebildet ist, um Spannung zwischen dem ersten DC-Leiter 3 und dem zweiten DC-Leiter 5 zu messen. Entsprechende Messwertsignale 41 werden dem Steuersystem 19 zugeführt. Das Steuersystem 19 kann eine Logikkomponente 43 umfassen, um basierend auf den Werten für Strom und/oder Spannung (Messsignale 41) das erste Schaltsystem 7 zu schließen und/oder das zweite Schaltsystem 15 zu öffnen.

Die Vorrichtung 1 weist ferner zwischen dem ersten Anschluss 27 des Umrichters und dem Abzweigpunkt 17 eine Drossel 45 in dem ersten DC-Leiter 3 auf, um eine Stromanstiegsbegrenzung zu bewirken. Das Übertragungssystem 11 weist zumindest eine Freileitung 47 auf. In der in Fig. 1 illustrierten Ausführungsform ist der zweite DC-Leiter 5 mit Masse (Erde) 49 verbunden.

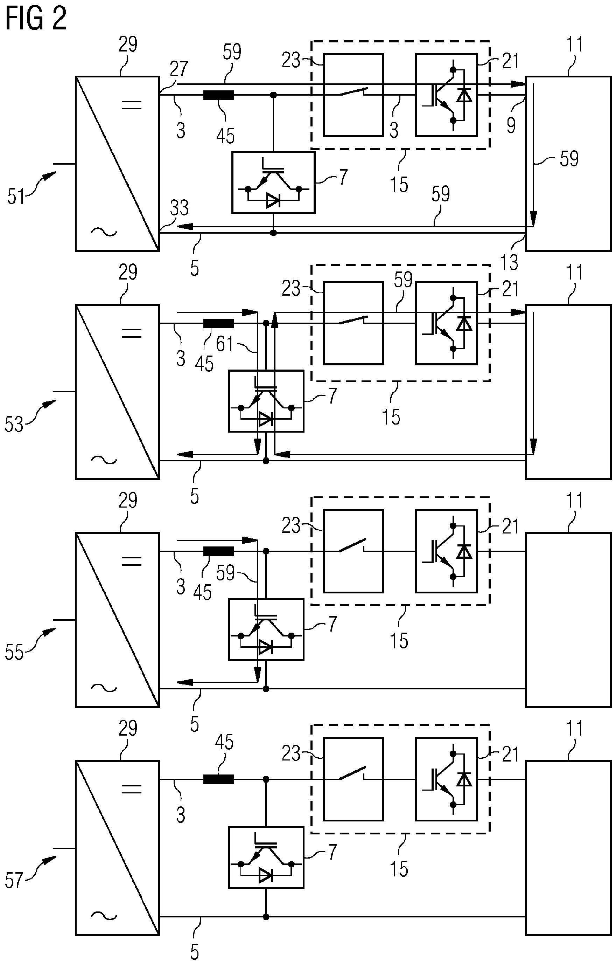

Die Vorrichtung 1 ist ausgebildet, ein Verfahren eines Unterbrechens eines in dem ersten DC-Leiter 3 fließenden elektrischen Gleichstroms gemäß einer Ausführungsform durchzuführen, wobei Schritte des Verfahrens schematisch in Fig. 2 als Schritte 51, 53, 55, 57 skizziert sind, welche zeitlich nacheinander ablaufen. Wegen Platzmangel sind die Steuerung 19 und das Messsystem 37 in Fig. 2 nicht illustriert.

In dem ersten Schritt 51 fließt ein Gleichstrom 59 von dem ersten Anschluss 27 des Umrichters 29 über die Drossel 45 und das geschlossene zweite Schaltsystem 15 zu dem ersten Anschluss 9 des Übertragungssystems, durch das Übertragungssystem 11 und über den zweiten Anschluss 13 des Übertragungssystems und den zweiten DC-Leiter 5 zu dem zweiten Anschluss 33 des Umrichters 29. Dabei ist das erste Schaltsystem 7 in einem offenen Zustand. Der Gleichstrom weißt dabei im ersten Moment den Nennwert der Anordnung auf.

Die Stärke des Stromflusses 59 und/oder die Spannung zwischen dem ersten DC-Leiter 3 und dem zweiten DC-Leiter 5 werden von dem Messsystem 37 überwacht und von der Steuerung 19 zur Steuerung des ersten Schaltsystems 7 und des zweiten Schaltsystems 15 verarbeitet.

Tritt nun ein Fehler im Übertragungssystem 11 auf, so kommt es zu einer Stromerhöhung. In dem Verfahrensschritt 53 wurde das erste Schaltsystem 7 (z.B. aufgrund eine Stromes oberhalb eines Schwellwertes und/oder einer Spannung unterhalb eines Schwellwertes) in einen geschlossenen Zustand überführt, während das Schaltsystem 15 weiterhin in einem geschlossenen Zustand befindlich ist. Ein Teil 61 des Gleichstroms 59 aus Verfahrensschritt 51 fließt somit von dem ersten DC-Leiter 3 über das erste Schaltsystem 7 zu dem zweiten DC-Leiter 5.

In dem Verfahrensschritt 55 ist das erste Schaltsystem 7 weiterhin in einem geschlossenen Zustand und das elektronische Schaltsystem 21 des zweiten Schaltsystems 15 wurde in einen geöffneten Zustand überführt. Dabei wird der Strom durch das Schaltsystem 15 zu Null reduziert.

Danach kann, wie im Verfahrensschritt 55 gezeigt, das zweite mechanische Schaltsystem 23 des zweiten Schaltsystems 15 weiterhin in einen geöffneten Zustand überführt werden. Somit fließt nach Öffnen des zweiten Schaltsystems 15 (im Wesentlichen) der gesamte Kurzschlussstrom 59 von dem ersten DC-Leiter 3 durch das erste Schaltsystem 7 zu dem zweiten DC-Leiter 5.

In dem letzten Verfahrensschritt 57 wird das erste Schaltsystem 7 wiederum in einen geöffneten Zustand überführt, so dass der Stromfluss zwischen dem ersten DC-Leiter 3 und dem zweiten DC-Leiter 5 unterbrochen ist. Ein Fehler in dem DC-Übertragungssystem 11 kann nun behoben werden, wonach das mechanische Schaltsystem 23 (bzw. das zweite Schaltsystem 15) wieder in den geschlossenen Zustand überführt werden kann, um einen Normalzustand der Vorrichtung 1 zu erreichen.

Die DC-seitige Fehlerklärung durch einen DC-Kurzschluss kann über einen elektronischen Zweig in Richtung Erde oder dem zweiten Pol zuerst in einen kontrollierten Zustand gebracht werden. In diesem Zustand kann dann eine Unterbrechung des fehlerhaften Pols durch eine Kombination aus einem mechanischen Schalter (z.B. mechanisches Schaltsystem 23) und einem elektronischen Schalter (z.B. elektronisches Schaltsystem 21) vorgenommen werden. Nach der Wiederverfestigung des mechanischen Schalters (z.B. mechanische Schaltsystem 23) kann dann der elektronische Zweig (z.B. erstes Schaltsystem 7) wieder abgeschaltet (d.h. in einen geöffneten Zustand überführt werden) und die Anlage kann zurück in den Nennzustand, d.h. Normalzustand übergehen.

## Patentansprüche

1. Vorrichtung (1) zum Unterbrechen eines in einem ersten DC-Leiter (3) und/oder einem zweiten DC-Leiter (5) fließenden elektrischen Gleichstromes (59), wobei der erste DC-Leiter (3) an einem Ende (4) mit einem ersten (9) und der zweite DC-Leiter (5) an einem Ende (6) mit einem zweiten Anschluss (13) eines DC-Systems (11), insbesondere DC-Übertragungssystems, verbunden sind, wobei die Vorrichtung aufweist:
ein erstes steuerbares Schaltsystem (7), das elektrisch zwischen dem ersten DC-Leiter (3) und dem zweiten DC-Leiter (5) verbindbar ist; und
ein zweites steuerbares Schaltsystem (15) (15), dass in dem ersten DC-Leiter (3) oder in dem zweiten DC-Leiter (5) zwischen einem zum ersten Schaltsystem (7) führenden Abzweigpunkt (17) in dem ersten DC-Leiter (3) bzw. dem zweiten DC-Leiter (5) und dem ersten (9) bzw. zweiten Anschluss (13) des DC-Systems (11) verbindbar ist,
**gekennzeichnet dadurch, dass** die Vorrichtung ferner aufweist:
ein Steuersystem (19), das ausgebildet ist, im Falle eines in dem ersten DC-Leiter und/oder dem zweiten DC-Leiter fließenden Gleichstromes oberhalb eines Schwellwertes, insbesondere im Falle eines Kurzschlusses im DC-Übertragungssystem:
das erste Schaltsystem (7) für eine Zeitspanne zu schließen, und
bei geschlossenem ersten Schaltsystem (7) das zweite Schaltsystem (15) zu öffnen,
wobei die Zeitspanne zwischen 0,5 ms und 50 ms beträgt, wobei das Steuersystem (19) ferner ausgebildet ist, das erste Schaltsystem (7) nach Öffnen des zweiten Schaltsystems (15) zu öffnen, wobei das erste steuerbare Schaltsystem (7) ein erstes elektronisches Schaltsystem aufweist oder ist, und wobei das zweite steuerbare Schaltsystem (15) eine Reihenschaltung eines zweiten elektronischen Schaltsystems (21) und eines mechanischen Schaltsystems (23) aufweist oder ist.

2. Vorrichtung nach Anspruch 1,
wobei das mechanische Schaltsystem eine Vakuumröhre oder Gasröhre, insbesondere mit N2 und/oder SF6 und/oder Luft befüllt, aufweist,
wobei das erste und/oder zweite elektronische Schaltsystem eine Reihenschaltung von Leistungstransistoren aufweist.

3. Vorrichtung gemäß einem der vorangehenden Ansprüche, wobei der erste DC-Leiter (3) an einem anderen Ende (25) mit einem ersten (27) und der zweite DC-Leiter (5) an einem anderen Ende (31) mit einem zweiten Anschluss (33) eines Umrichters (29), insbesondere DC-AC-Umrichters, verbunden sind.

4. Vorrichtung gemäß dem Anspruch 3, wobei das erste Schaltsystem (7) für mindestens die Nennspannung des Umrichters (29) ausgelegt ist.

5. Vorrichtung gemäß einem der Ansprüche 3 oder 4, wobei der Umrichter (29) und/oder das DC-Übertragungssystem (11) mit einem Übertragungsnetz oder einem Verteilernetz (35) verbunden sind.

6. Vorrichtung gemäß einem der vorangehenden Ansprüche, ferner aufweisend:
ein Messsystem (37, 39), ausgebildet:
um Strom in dem ersten und/oder zweiten DC-Leiter zu messen; und/oder
um Spannung zwischen dem ersten und dem zweiten DC-Leiter zu messen,
wobei Werte für gemessenen Strom und/oder Spannung der Steuerung (19) zugeführt werden.

7. Vorrichtung gemäß einem der vorangehenden Ansprüche, wobei die Steuerung (19) eine Logikkomponente (43) umfasst, um basierend auf den Werten für gemessenen Strom und/oder Spannung das erste Schaltsystem zu schließen und/oder das zweite Schaltsystem zu öffnen.

8. Vorrichtung gemäß einem der Ansprüche 3 bis 5 wobei zwischen dem ersten (27) oder zweiten Anschluss (33) des Umrichters (29) und dem Abzweigpunkt (17) eine Drossel (45) in dem ersten oder zweiten DC-Leiter zur Strombegrenzung verbunden ist.

9. Vorrichtung gemäß einem der vorangehenden Ansprüche,
wobei das Übertragungssystem (11) mindestens eine Freileitung (47) aufweist und/oder
wobei der zweite DC-Leiter (5) mit Masse (49) verbunden ist.

10. Verfahren zum Unterbrechen eines in einem ersten DC-Leiter (3) und/oder einem zweiten DC-Leiter (5) fließenden elektrischen Gleichstromes (59), wobei der erste DC-Leiter (3) an einem Ende (4) mit einem ersten (9) und der zweite DC-Leiter (5) an einem Ende (6) mit einem zweiten Anschluss (13) eines DC-Systems (11), insbesondere DC-Übertragungssystems, verbunden sind, wobei das Verfahren aufweist: im Falle eines in dem ersten DC-Leiter und/oder dem zweiten DC-Leiter fließenden Gleichstromes oberhalb eines Schwellwertes, insbesondere im Falle eines Kurzschlusses im DC-Übertragungssystem, Schließen (53) für eine Zeitspanne eines ersten steuerbaren Schaltsystems (7), das elektrisch zwischen dem ersten DC-Leiter (3) und dem zweiten DC-Leiter (5) verbunden ist, wobei die Zeitspanne zwischen 0,5 ms und 50 ms beträgt; Öffnen (55), bei geschlossenem ersten Schaltsystem, eines zweiten steuerbaren Schaltsystems (15) in dem ersten DC-Leiter (3) oder in dem zweiten DC-Leiter (5) zwischen einem zum ersten Schaltsystem (7) führenden Abzweigpunkt (17) in dem ersten DC-Leiter (3) bzw. dem zweiten DC-Leiter (5) und dem ersten (9) bzw. zweiten Anschluss (13) des DC-Systems (11); Öffnen des ersten Schaltsystems nach der Öffnung des zweiten Schaltsystems; und wobei das erste steuerbare Schaltsystem (7) ein erstes elektronisches Schaltsystem aufweist oder ist, und wobei das zweite steuerbare Schaltsystem (15) eine Reihenschaltung eines zweiten elektronischen Schaltsystems (21) und eines mechanischen Schaltsystems (23) aufweist oder ist.

## Claims

1. Device (1) for interrupting a direct electric current (59) flowing in a first DC conductor (3) and/or a second DC conductor (5), wherein the first DC conductor (3) is connected at one end (4) to a first connection (9), and the second DC conductor (5) is connected at one end (6) to a second connection (13), of a DC system (11), in particular a DC transmission system, wherein the device has:
a first controllable switching system (7) that can be electrically connected between the first DC conductor (3) and the second DC conductor (5); and
a second controllable switching system (15) that can be connected, in the first DC conductor (3) or in the second DC conductor (5), between a branch point (17), leading to the first switching system (7), in the first DC conductor (3) or the second DC conductor (5), and the first connection (9), or second connection (13), of the DC system (11),
**characterized in that** the device also has:
a control system (19) that is designed, if a direct current flowing in the first DC conductor and/or the second DC conductor is above a threshold value, in particular if there is a short circuit in the DC transmission system:
to close the first switching system (7) for a period of time, and
to open the second switching system (15) when the first switching system (7) is closed,
wherein the period of time is between 0.5 ms and 50 ms, wherein the control system (19) is also designed to open the first switching system (7) after opening the second switching system (15), wherein the first controllable switching system (7) has or is a first electronic switching system, and wherein the second controllable switching system (15) has or is a series circuit of a second electronic switching system (21) and a mechanical switching system (23).

2. Device according to Claim 1,
wherein the mechanical switching system has a vacuum tube or gas tube, in particular filled with N2 and/or SF6 and/or air, wherein the first and/or second electronic switching system has a series circuit of power transistors.

3. Device according to either of the preceding claims,
wherein the first DC conductor (3) is connected at another end (25) to a first connection (27), and the second DC conductor (5) is connected at another end (31) to a second connection (33), of a converter (29), in particular of a DC-AC converter.

4. Device according to Claim 3,
wherein the first switching system (7) is configured for at least the rated voltage of the converter (29).

5. Device according to either of Claims 3 and 4,
wherein the converter (29) and/or the DC transmission system (11) are/is connected to a transmission grid or a distribution grid (35).

6. Device according to one of the preceding claims, also having:
a measurement system (37, 39), designed:
to measure current in the first and/or second DC conductor; and/or
to measure voltage between the first and the second DC conductor,
wherein values for measured current and/or voltage are supplied to the control unit (19).

7. Device according to one of the preceding claims,
wherein the control unit (19) comprises a logic component (43) to close the first switching system and/or to open the second switching system on the basis of the values for measured current and/or voltage.

8. Device according to one of Claims 3 to 5,
wherein an inductor (45) in the first or second DC conductor is connected between the first connection (27) or second connection (33) of the converter (29) and the branch point (17) to limit the current.

9. Device according to one of the preceding claims,
wherein the transmission system (11) has at least one overhead line (47), and/or
wherein the second DC conductor (5) is connected to earth (49) .

10. Method for interrupting a direct electric current (59) flowing in a first DC conductor (3) and/or a second DC conductor (5), wherein the first DC conductor (3) is connected at one end (4) to a first connection (9), and the second DC conductor (5) is connected at one end (6) to a second connection (13), of a DC system (11), in particular a DC transmission system, wherein the method includes:
if a direct current flowing in the first DC conductor and/or the second DC conductor is above a threshold value, in particular if there is a short circuit in the DC transmission system,
closing (53), for a period of time, a first controllable switching system (7) that is electrically connected between the first DC conductor (3) and the second DC conductor (5), wherein the period of time is between 0.5 ms and 50 ms;
when the first switching system is closed, opening (55) a second controllable switching system (15) in the first DC conductor (3) or in the second DC conductor (5) between a branch point (17), leading to the first switching system (7), in the first DC conductor (3) or the second DC conductor (5) and the first connection (9), or second connection (13), of the DC system (11);
opening the first switching system after opening the second switching system;
and wherein the first controllable switching system (7) has or is a first electronic switching system, and wherein the second controllable switching system (15) has or is a series circuit of a second electronic switching system (21) and a mechanical switching system (23).

## Revendications

1. Montage (1) d'interruption d'un courant (59) électrique continu passant dans un premier conducteur (3) à courant continu et/ou un deuxième conducteur (5) à courant continu, dans lequel le premier conducteur (3) à courant continu est relié à une extrémité (4) à une première borne (9) d'un système (11) à courant continu et le deuxième conducteur (5) à courant continu est relié à une extrémité (6) à une deuxième borne (13) du système (11) à courant continu, notamment un système de transport à courant continu, dans lequel le montage a :
un premier système (7) de coupure, qui peut être commandé et qui peut être monté électriquement entre le premier conducteur (3) à courant continu et le deuxième conducteur (5) à courant continu ; et
un deuxième système (15) de coupure, qui peut être commandé et qui peut être monté dans le premier conducteur (3) à courant continu ou dans le deuxième conducteur (5) à courant continu entre un point (17) de dérivation, menant au premier système (7) de coupure, du premier conducteur (3) à courant continu ou du deuxième conducteur (5) à courant continu, et la première borne (9) ou la deuxième borne (13) du système (11) à courant continu
**caractérisé en ce que** le montage a en outre :
un système (19) de commande, qui est constitué pour, dans le cas d'un courant continu au-dessus d'une valeur de seuil passant dans le premier conducteur à courant continu et/ou dans le deuxième conducteur à courant continu, notamment dans le cas d'un court circuit dans le système de transport à courant continu :
fermer le premier système (7) de coupure pendant un laps de temps, et
alors que le premier système (7) de coupure est fermé, ouvrir le deuxième système (15) de coupure,
dans lequel le laps de temps est compris entre 0,5 ms et 50 ms, dans lequel le système (19) de commande est constitué en outre, pour ouvrir le premier système (7) de coupure, après l'ouverture du deuxième système (15) de coupure, dans lequel le premier système (7) de coupure pouvant être commandé a un premier système électronique de coupure ou est un système électronique de coupure, et dans lequel le deuxième système (15) de coupure pouvant être commandé a un circuit série d'un deuxième système (21) électronique de coupure et d'un système (23) mécanique de coupure ou en est un.

2. Montage suivant la revendication 1,
dans lequel le système mécanique de coupure a un tube à vide ou un tube à gaz, en étant rempli notamment de N2 et/ou de SF6 et/ou d'air, dans lequel le premier et/ou le deuxième système électronique de coupure a un circuit série de transistors de puissance.

3. Montage suivant l'une des revendications précédentes,
dans lequel le premier conducteur (3) à courant continu est relié à une autre extrémité (25) à une première borne (27) d'un convertisseur, notamment d'un onduleur à courant continu - courant alternatif et le deuxième conducteur (5) à courant continu est relié à une autre extrémité (31) à une autre borne (33) d'un convertisseur (29), notamment de l'onduleur de courant continu-courant alternatif.

4. Montage suivant la revendication 3,
dans lequel le premier système (7) de coupure est conçu pour au moins la tension nominale du convertisseur (29).

5. Montage suivant l'une des revendications 3 ou 4,
dans lequel le convertisseur (29) et/ou le système (11) de transport à courant continu sont reliés à un réseau de transport ou à un réseau (35) de distribution.

6. Montage suivant l'une des revendications précédentes, comportant en outre :
un système (37, 39) de mesure constitué :
pour mesurer du courant dans le premier et/ou le deuxième conducteur à courant continu et/ou
mesurer de la tension entre le premier et le deuxième
conducteur à courant continu,
dans lequel des valeurs du courant et/ou de la tension mesuré sont envoyées à la commande (19).

7. Montage suivant l'une des revendications précédentes, dans lequel la commande (19) comprend un composant (43) logique pour, sur la base des valeurs du courant et/ou de la tension mesuré, fermer le premier système de coupure et/ou le deuxième système de coupure.

8. Montage suivant l'une des revendications 3 à 5, dans lequel entre la première borne (27) ou la deuxième borne (33) du convertisseur (29) et le point (17) de dérivation, une bobine (45) de self est montée dans le premier ou dans le deuxième conducteur à courant continu pour limiter le courant.

9. Montage suivant l'une des revendications précédentes,
dans lequel le système (11) de transport a au moins une ligne (47) aérienne et/ou
dans lequel le deuxième conducteur (5) à courant continu est relié à la masse (49).

10. Procédé d'interruption d'un courant (59) électrique continu passant dans un premier conducteur (3) à courant continu et/ou dans un deuxième conducteur (5) à courant continu, dans lequel le premier conducteur (3) à courant continu est relié à une extrémité (4) à une première borne (9) d'un système (11) à courant continu et le deuxième conducteur (5) à courant continu est relié à une extrémité (6) à une deuxième borne (13) du système (11) à courant continu, notamment un système de transport à courant continu, procédé dans lequel :
dans le cas d'un courant continu, au-dessus d'une valeur de seuil passant dans le premier conducteur à courant continu et/ou dans le deuxième conducteur à courant continu, notamment dans le cas d'un court-circuit dans le système de transport à courant continu,
on ferme (53) pendant un laps de temps un premier système (7) de coupure, qui peut être commandé et qui est monté électriquement entre le premier conducteur (3) à courant continu et le deuxième conducteur (5) à courant continu, le laps de temps étant compris enter 0,5 ms et 50 ms ;
on ouvre (55), alors que le premier système de coupure est fermé, un deuxième système (15) de coupure pouvant être commandé dans le premier conducteur (3) à courant continu ou dans le deuxième conducteur (5) à courant continu entre un point (17) de dérivation, menant au premier système (7) de coupure du premier conducteur (3) à courant continu ou du deuxième conducteur (5) à courant continu, et la première borne (9) ou la deuxième borne (13) du système (11) à courant continu ;
on ouvre le premier système de coupure après l'ouverture du deuxième système de coupure ;
et dans lequel le premier système (7) de coupure pouvant être commandé a un premier système électronique de coupure ou en est un et dans lequel le deuxième système (15) de coupure pouvant être commandé est un circuit série d'un deuxième système (21) électronique de coupure et d'un système (23) mécanique de coupure ou en est un.
